(19) **Europäisches Patentamt / European Patent Office / Office européen des brevets**

(11) **EP 4 521 257 A1**

(12) **EUROPEAN PATENT APPLICATION**
published in accordance with Art. 153(4) EPC

(43) Date of publication:
**12.03.2025 Bulletin 2025/11**

(21) Application number: **23811075.3**

(22) Date of filing: **24.05.2023**

(51) International Patent Classification (IPC):
**G06F 12/0877** *(2016.01)*

(52) Cooperative Patent Classification (CPC):
**G06F 3/06; G06F 12/0877**

(86) International application number:
**PCT/CN2023/095923**

(87) International publication number:
**WO 2023/227004 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.05.2022 CN 202210575022**
**24.08.2022 CN 202211016161**

(71) Applicant: **Huawei Technologies Co., Ltd.**
**Shenzhen, Guangdong 518129 (CN)**

(72) Inventor: **LUO, Xingyu**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **MEMORY ACCESS POPULARITY STATISTICAL METHOD, RELATED APPARATUS AND DEVICE**

(57) A memory access popularity statistics method, a controller, a chip, a memory, a mainboard, and a computer device are disclosed, and relate to the computer field. The method includes: collecting, based on an operation performed on a memory by an application program run by a processor, statistics about access frequency of accessing a data block in the memory by the processor, and determining access popularity of the data block based on the access frequency. The access frequency represents frequency of accessing the data block by the application program. Accessing the data block for more times by the application program indicates that the data block is accessed more frequently by the application program, and the access popularity of the data block is higher. Accessing the data block for fewer times by the application program indicates that the data block is accessed less frequently by the application program, and the access popularity of the data block is lower. In this way, hot data is migrated to a near memory, and cold data is migrated to a far memory, so that the processor may obtain frequently accessed data from the near memory as quickly as possible. This improves a data processing speed of a system, reduces a data processing delay, and significantly improves access performance of the system.

FIG. 2

EP 4 521 257 A1

**Description**

This application claims priorities to Chinese Patent Application No. 202210575022.5, filed with the China National Intellectual Property Administration on May 24, 2022 and entitled "DATA MIGRATION METHOD", and Chinese Patent Application No. 202211016161.0 filed with the China National Intellectual Property Administration on August 24, 2022 and entitled "MEMORY ACCESS POPULARITY STATISTICS METHOD AND RELATED APPARATUS AND DEVICE", which are incorporated herein by reference in their entireties.

**TECHNICAL FIELD**

This application relates to the computer field, and in particular, to a memory access popularity statistics method, a controller, a chip, a memory, a mainboard, and a computer device.

**BACKGROUND**

Currently, a storage device with a high access speed is expected to store frequently accessed data, and a storage device with a low access speed is expected to store infrequently accessed data. However, because accuracy of an existing memory access popularity statistics method is low, the storage device with the high access speed may store the infrequently accessed data, or the storage device with the low access speed may store the frequently accessed data. This affects a data processing speed and delay of a system.

**SUMMARY**

This application provides a memory access popularity statistics method, a controller, a chip, a memory, a mainboard, and a computer device, to improve a data processing speed of a system and reduce a data processing delay.

According to a first aspect, a memory access popularity statistics method is provided, and the method is performed by a controller. The method includes: collecting, based on an operation performed on a memory of a computer device by an application program run by a processor in the computer device, statistics about access frequency of accessing a data block in the memory by the processor, to determine access popularity of the data block based on the access frequency.

In this way, the access frequency intuitively represents frequency of accessing the data block by the application program. Accessing the data block for more times by the application program indicates that the data block is accessed more frequently by the application program, and the access popularity of the data block is higher. Accessing the data block for fewer times by the application program indicates that the data block is accessed less frequently by the application program, and the access popularity of the data block is lower. Therefore, when data migration is triggered based on the access popularity of the data block, hot data may be migrated to a near memory, and cold data may be migrated to a far memory, so that the processor may obtain frequently accessed data from the near memory as quickly as possible. This improves a data processing speed of a system, reduces a data processing delay, and significantly improves access performance of the system.

In a possible implementation, collecting statistics about access frequency of accessing a data block in which a first address is located includes: collecting statistics about the access frequency of accessing the data block in which the unit storage space to which the first address belongs is located.

A size of the data block is a multiple of unit storage space in the memory that is accessible to the processor. The computer device performs a read operation or a write operation on storage space in the memory by using a cache line (cache line) as a granularity, and manages the storage space in the memory by using a page as a granularity. One page may include a plurality of cache lines. The size of the data block is a size of one page in the memory that is accessible to the processor in the computer device. A size of the unit storage space may be a size of the cache line when the processor in the computer device accesses the memory. An operation performed on a cache line in the memory by the application program run by the processor in the computer device may be considered as an operation on a page. In this way, the processor performs an operation on the memory by using the cache line as the granularity, and the cache line belongs to a managed page. Therefore, when the operation is performed on the cache line in the memory once, the page to which the cache line belongs is read and written once. The controller collects statistics about access frequency of accessing the page to which an operated cache line belongs. This effectively improves accuracy of identifying access popularity of the page. In addition, the controller collects, by using the page as the granularity, statistics about the access frequency of accessing the page, which is compatible with a manner of memory page management performed by the computer device. The memory access popularity statistics method is easy to use.

In addition, an interleaving manner means that the processor in the computer device distributes data to a plurality of memories for an operation. The application program run by the processor in the computer device performs an operation on the memory of the computer device in the interleaving manner, and performs data processing based on a plurality of memory channels, to improve memory bandwidth utilization and processing performance of the computer device. Alternatively, the size of the data block may be a size of an interleaved data block in the memory that is accessible to the processor in the computer device in the interleaving manner.

In another possible implementation, the method further includes: identifying a second address based on an address of the data block in which the first address is located and an address mapping relationship. The second address indicates a location, in the controller, at which the access frequency of accessing the data block is stored. The address mapping relationship indicates a mapping relationship between the address of the data block and an address of storage space in which the access frequency is stored. Therefore, the controller obtains, based on the second address, access frequency of accessing a data block stored in a first storage medium, and updates the access frequency of accessing the data block.

In another possible implementation, the memory includes the first storage medium, the first storage medium is configured to store the access frequency of accessing the data block in the memory, and the second address indicates storage space that is in the first storage medium and in which the access frequency of accessing the data block is stored.

In another possible implementation, because the computer device pre-allocates a capacity of a memory device in the memory, when the processor accesses the first storage medium, the computer device allocates, from the capacity of the memory device in the memory, physical address space corresponding to a capacity of the first storage medium to the first storage medium, and the controller maps a physical address for accessing the first storage medium to the first storage medium. In this way, the corresponding capacity in the memory device cannot be used, causing a waste of storage space of the memory device. For example, a total capacity of the memory device in the memory is 64 GB, a page size is 4 KB, and an access frequency bit width for storing each data block is 4 B. This wastes 64 MB memory storage space. The method further includes: identifying the second address based on a third address indicated by the processor and the address mapping relationship, to obtain the access frequency of accessing the data block, where the third address is determined based on the second address. Therefore, the storage space of the memory device is saved, and utilization of the storage space of the memory device is improved.

In another possible implementation, the method further includes: The controller determines the access popularity of the data block based on the access frequency, and triggers the data migration based on the access popularity. For example, the controller feeds back access popularity of data blocks to the processor, and the processor controls the data blocks with different access popularity to perform data migration. For example, the processor stores the cold data in the far memory, and stores the hot data in the near memory. In this way, when the controller triggers the data migration based on the access popularity of the data block, the hot data may be migrated to the near memory, and the cold data may be migrated to the far memory, so that the processor may obtain data from the near memory as quickly as possible. This improves the data processing speed of the system, reduces the data processing delay, and improves overall processing performance of the system.

According to a second aspect, a memory access popularity statistics method is provided. The method is performed by a processor, and includes: receiving access frequency of interleaved data blocks sent by a plurality of memories, and combining the access frequency of accessing the interleaved data blocks to obtain access frequency of accessing a page. The access frequency of accessing the interleaved data block indicates access frequency of accessing, by the processor, a data block in one of the plurality of memories in an interleaving manner.

In this way, when an application program run by the processor in a computer device performs an operation on a memory of the computer device in the interleaving manner, and performs data processing based on a plurality of memory channels, to improve memory bandwidth utilization and processing performance of the computer device, a controller combines the access frequency of accessing the interleaved data blocks sent by the plurality of memories, to obtain the access frequency of accessing the page, so that access popularity of the page is determined based on the access frequency of accessing the page. When data migration is triggered based on the access popularity of the page, hot data may be migrated to a near memory, and cold data may be migrated to a far memory. In this way, the processor may obtain frequently accessed data from the near memory as quickly as possible. This improves a data processing speed of a system, reduces a data processing delay, and significantly improves access performance of the system.

According to a third aspect, a memory access popularity statistics apparatus is provided. The apparatus includes modules configured to perform the memory access popularity statistics method in any one of the first aspect or the possible designs of the first aspect, or modules configured to perform the memory access popularity statistics method in any one of the second aspect or the possible designs of the second aspect.

According to a fourth aspect, a controller is provided. The controller includes a processing unit and a storage unit. The storage unit is configured to store a group of computer instructions. When the processing unit is used as the controller in any one of the first aspect or the possible implementations of the first aspect to execute the group of computer instructions, the processing unit performs an operation step of the memory access popularity statistics method in any one of the first aspect or the possible implementations of the first aspect. The controller is a register clock driver (Register Clock Driver, RCD) or an extended controller in a memory of a computer device.

According to a fifth aspect, a chip is provided, including a processor and a power supply circuit. The power supply circuit is configured to supply power to the processor, and the processor is configured to perform an operation step of the memory access popularity statistics method in any one of the first aspect or the possible implementations of the first aspect.

According to a sixth aspect, a memory is provided. The memory includes a storage device and the controller according to the fourth aspect, and the storage device is configured to store a group of computer instructions. When executing the group of computer instructions, the controller performs an operation step of the memory access popularity statistics method in any one of the first aspect or the possible implementations of the first aspect.

According to a seventh aspect, a mainboard is provided. The mainboard includes the controller according to the fourth aspect, and the controller performs an operation step of the memory access popularity statistics method in any one of the first aspect or the possible implementations of the first aspect.

According to an eighth aspect, a computer device is provided. The computer device includes the mainboard according to the seventh aspect.

According to a ninth aspect, a computer-readable storage medium is provided, including computer software instructions. When the computer software instructions are run on a computing device, the computing device is enabled to perform an operation step of the method according to any one of the first aspect or the possible implementations of the first aspect.

According to a tenth aspect, a computer program product is provided. When the computer program product runs on a computer, a computing device is enabled to perform an operation step of the method according to any one of the first aspect or the possible implementations of the first aspect.

In this application, based on the implementations according to the foregoing aspects, the implementations may be combined to provide more implementations.

## BRIEF DESCRIPTION OF DRAWINGS

FIG. 1 is a schematic diagram of a structure of a computer device according to this application;
FIG. 2 is a schematic flowchart of a memory access popularity statistics method according to this application;
FIG. 3 is a schematic diagram of a relationship between a cache line and a page according to this application;
FIG. 4 is a schematic diagram of a storage structure of access frequency according to this application;
FIG. 5 is a schematic diagram of an interleaving manner according to this application;
FIG. 6 is a schematic diagram of a structure of another computer device according to this application;
FIG. 7 is a schematic diagram of a memory access popularity statistics apparatus according to this application; and
FIG. 8 is a schematic diagram of a structure of a controller according to this application.

## DESCRIPTION OF EMBODIMENTS

For ease of description, terms in this application are first briefly explained.

**Storage device:** The storage device is a memory component for storing programs and various data. An access speed is a data transmission speed at which data is written to or read from the storage device. The access speed may also be referred to as a read/write speed. Based on the access speed of the storage device, a main storage device connected to a processor in a computer device may be divided into a far memory (far memory) and a near memory (near memory). The main storage device may be referred to as a main memory (main memory) or a memory (memory) for short. An access speed of the near memory is greater than an access speed of the far memory. For example, the near memory may be a dynamic random access memory (Dynamic Random Access Memory, DRAM) or a double data rate synchronous dynamic random access memory (double data rate SDRAM, DDR SDRAM). The far memory may be a storage class memory (storage class memory, SCM).

**Hot data:** The hot data is data that is frequently accessed by the processor. If the hot data is stored in the near memory, the processor may obtain the data as quickly as possible. This improves a data processing speed of a system, reduces a data processing delay, and significantly improves access performance of the system.

**Cold data:** The cold data is data that is not frequently accessed by the processor. If the cold data is stored in the far memory, data reliability can be improved, and more hot data can be stored in the near memory. This improves resource utilization of the near memory and reduces system costs.

**Cache line (cache line):** The cache line is a unit used by the computer device to perform a read operation or a write operation on storage space in the memory. A size of the cache line can be 64 bytes (byte, B).

**Page:** The page is a unit used by the computer device to manage the storage space in the memory. For example, a page size (page size) is 4 kilobytes (Kilobytes, KB), 2 megabytes (Megabytes, MB), or another byte size. A 4 KB page may be referred to as a small page. A 2 MB page may be referred to as a huge page. A smaller page indicates more resources required by the computer device to manage the memory, and a huger page indicates less resources required by the computer device to manage the memory. One page may include a plurality of cache lines. To be specific, the page size is a multiple of the size of the cache line.

**Interleaving:** Interleaving refers to evenly distributing data accessing the memory to a plurality of memory channels based on unit storage space (for example, the cache line). An interleaving manner may be configured by a system administrator, and the interleaving may be performed among a plurality of memory channels connected to one processor, or the interleaving may be performed among a plurality of memory channels of a plurality of processors.

**Memory channel:** The memory channel refers to a plurality of memories connected to the processor in the computer device. The processor may perform an operation on the memory by using an interleaving technology. For example, the processor evenly distributes, based on the size of the cache line, data to be written into the memory to the plurality of memory channels. Further, the processor reads the data from the plurality of memory channels based on the size of the cache line. Data processing is performed based on the plurality of memory channels, so that memory bandwidth utilization and processing performance of the computer device are improved.

To improve accuracy of memory access popularity statistics, this application provides a memory access popularity statistics method. To be specific, based on an operation performed on the memory of the computer device by the application program run by the processor in the computer device, statistics about access frequency of accessing a data block in the memory by the processor are collected, to determine access popularity of the data block based on the access frequency, and trigger data migration based on the access popularity. The access frequency intuitively represents frequency of accessing the data block by the application program. Accessing the data block for more times by the application program indicates that the data block is accessed more frequently by the application program, and the access popularity of the data block is higher. Accessing the data block for fewer times by the application program indicates that the data block is accessed less frequently by the application program, and the access popularity of the data block is lower. Therefore, when the data migration is triggered based on the access popularity of the data block, the hot data may be migrated to the near memory, and the cold data may be migrated to the far memory, so that the processor may obtain frequently accessed data from the near memory as quickly as possible. This improves the data processing speed of the system, reduces the data processing delay, and significantly improves the access performance of the system.

A size of the data block is a multiple of unit storage space in the memory that is accessible to the processor. For example, the size of the data block is a page size used by the computer device to manage the memory. For another example, the size of the data block is a size of an interleaved data block in the memory that is accessible to the processor in the computer device in the interleaving manner.

The following describes in detail the memory access popularity statistics method provided in this application with reference to accompanying drawings.

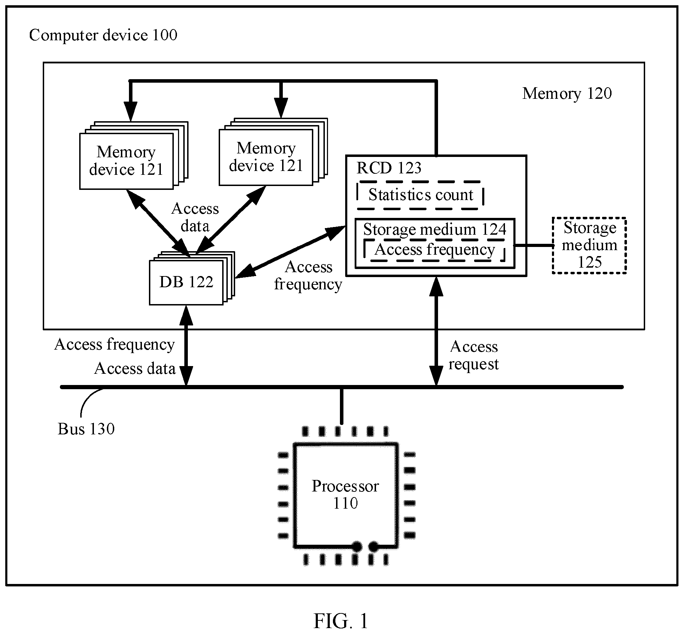

FIG. 1 is a schematic diagram of a structure of a computer device according to this application. Herein, an example in which the computer device includes a near memory is used for description. As shown in FIG. 1, a computer device 100 includes a processor 110 and a memory 120. The processor 110 is connected to the memory 120 by using a bus 130.

The processor 110 may be an XPU used for data processing, such as a central processing unit (central processing unit, CPU), a graphics processing unit (graphics processing unit, GPU), a data processing unit (data processing unit, DPU), a neural processing unit (neural processing unit, NPU), and an embedded neural-network processing unit (neural-network processing unit, NPU). The processor 110 may also be another general-purpose processor, a digital signal processor (digital signal processing, DSP), an application-specific integrated circuit (application-specific integrated circuit, ASIC), a field-programmable gate array (field-programmable gate array, FPGA), or a system on chip (system on chip, SoC) or another programmable logic device, a discrete gate or a transistor logic device, a discrete hardware component, or the like. The general-purpose processor may be a microprocessor or any conventional processor or the like. For ease of description, in the following embodiment, an example in which the processor 110 is the CPU is used for description.

The computer device 100 in FIG. 1 may include one or more processors. The processor may be a multi-core (multi-core) processor. The processor herein may be one or more devices, circuits, and/or processing units configured to process data (for example, computer program instructions).

The processor 110 is configured to run an application program to perform a read operation or a write operation on the memory 120, and trigger data migration based on frequency of access to the memory 120.

The bus 130 may include a channel, configured to transmit data between the foregoing components (for example, the processor 110 and the memory 120). For example, the processor 110 sends an access request to the memory 120, and the memory 120 feeds back access frequency of accessing a data block to the processor 110. In addition to a data bus, the bus 130 may further include a power bus, a control bus, a status signal bus, and the like. For example, the bus 130 is a DDR bus. However, for clear description, various types of buses are marked as the bus 130 in the figure.

The memory 120 may be a volatile memory pool or a nonvolatile memory pool, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation description, many forms of RAMs may be used, for example, a static random access memory (static RAM, SRAM), a DRAM, a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 120 includes a memory device 121, a data buffer (Data Buffer, DB) 122, and a register clock driver (Register Clock Driver, RCD) 123. The DB 122 is connected to the memory device 121 and the RCD 123.

The memory device 121 is configured to store application data of the application program run by the processor 110. For example, the memory device 121 may be the DRAM.

The DB 122 is configured to drive a data signal generated by a memory controller in the processor 110, to write data sent by the processor 110 into the memory device 121, and transmit application data stored in the memory device 121 to the processor 110 or transmit access frequency of accessing a data block stored in the RCD 123 to the processor 110.

The RCD 123 is configured to drive a clock (clock) signal, an address (address) signal, and a command (command) signal that are generated by the memory controller in the processor 110, to implement an operation on a plurality of memory devices 121. The RCD 123 is configured to: perform the read operation or the write operation on the memory device 121 in the memory 120 based on the access request of the processor 110, count access frequency of accessing a data block in the memory device 121 in the memory 120, and store the access frequency of accessing the data block. The RCD 123 is further configured to obtain the access frequency of accessing the data block from a storage medium 124. Optionally, the RCD 123 may determine, based on the access frequency, access popularity of the data block to trigger data migration.

The RCD 123 includes the storage medium 124, and the storage medium 124 is configured to store the access frequency of accessing the data block. In this way, it avoids that storage space of the memory device 121 is occupied to store the access frequency of accessing the data block, and resource utilization of the memory device 121 is improved. The storage medium 124 may be a volatile memory pool or a nonvolatile memory pool, or may include both a volatile memory and a nonvolatile memory. For example, the storage medium 124 may be the RAM or the ROM. A storage capacity of the storage medium 124 is related to a size of the data block used for collecting statistics about the access frequency. The storage capacity of the storage medium 124 may be determined in the following two manners.

**Manner 1: Determine, based on a capacity of a memory, a page size, and a bit width of a counter that counts access frequency, a capacity of a storage medium that stores the access frequency of accessing a page.**

When statistics about the access frequency of accessing the page are collected, the capacity of the storage medium used for storing the access frequency of accessing the page may be determined based on the capacity of the memory, the page size, and the bit width of the counter that counts the access frequency. The capacity of the storage medium is shown in the following formula (1).

$$n_1^{\text{capacity}} = (n^{\text{capacity}}/X^{\text{page size}}) * W^{\text{count}} \qquad \text{Formula (1)}$$

$n_1^{\text{capacity}}$ represents the capacity of the storage medium used for storing the access frequency of accessing the page, $n^{\text{capacity}}$ represents the capacity of the memory, $X^{\text{page size}}$ represents the page size, and $W^{\text{count}}$ represents the bit width of the counter that counts the access frequency. The bit width of the counter may be determined based on an empirical value. A larger bit width of the counter indicates a larger value recorded by the counter; and a smaller bit width of the counter indicates a smaller value recorded by the counter.

Example 1: It is assumed that a capacity of the memory is 64 GB, a page size is 4 KB, and a bit width of the counter is 4 B, a capacity of the storage medium is (64 GB/4 KB)*4 B=64 MB.

Example 2: It is assumed that a capacity of the memory is 64 GB, a page size is 2 MB, and a bit width of the counter is 4 B, a capacity of the storage medium is (64 GB/2 MB)*4 B=128 KB.

It can be learned that a larger page size indicates a smaller capacity of the storage medium, and indicates that less data of the access frequency of accessing the page needs to be stored. A smaller page size indicates a larger capacity of the storage medium, and indicates that more data of the access frequency of accessing the page needs to be stored.

In addition, when the computer device manages the memory by using the 4 KB page, the storage medium 124 requires large storage space. In some embodiments, the RCD 123 may be further connected to an external storage medium, to expand a capacity of the RCD 123 for storing the access frequency of accessing the page. For example, as shown in FIG. 1, the RCD 123 is further connected to a storage medium 125. The storage medium 124 may be configured to cache access frequency of a frequently accessed page. The storage medium 125 is configured to store the access frequency of accessing the page. Optionally, when the RCD 123 updates the access frequency of accessing the page stored in the storage medium 125, two operations performed by the storage medium 125 are involved. The RCD 123 may meet, by expanding a bandwidth of the storage medium or increasing the access frequency of accessing the storage medium, a requirement for storing the access frequency. For example, the RCD 123 may be connected to at least two storage media to expand the bandwidth of the storage medium and increase the access frequency of accessing the storage medium.

**Manner 2: Determine, based on a capacity of a memory, a page size, a bit width of a counter that counts access frequency, and a quantity of interleaved internal channels, a capacity of a storage medium that stores the access frequency of accessing an interleaved data block.**

When statistics about the access frequency of accessing the interleaved data block are collected, the capacity of the storage medium used for storing the access frequency of accessing the interleaved data block may be determined based on the capacity of the memory, the page size, the bit width of the counter that counts the access frequency, and the quantity of interleaved internal channels.

It is assumed that there are $N^{channel}$ memory channels in a computer device, a page size is $X^{page\ size}$ bytes, data is interleaved on the $N^{channel}$ memory channels based on a granularity of a cache line, and a size of an interleaved data block (sub-page (sub-page)) distributed in each memory channel is $X^{page\ size}/N^{channel}$ bytes. To be specific, a controller of each memory channel manages a memory unit based on the $X^{page\ size}/N^{channel}$ bytes, and the controller of each memory channel records the access frequency of accessing the data block based on the $X^{page\ size}/N^{channel}$ bytes. The capacity of the storage medium is shown in the following formula (2).

$$n_1^{capacity}=(n^{capacity}/(X^{page\ size}/N^{channel})*W^{count})\ \text{Formula (2)}$$

$n_1^{capacity}$ represents the capacity of the storage medium that stores the access frequency of accessing the interleaved data block, $n^{capacity}$ represents the capacity of the memory, $X^{page\ size}$ represents the page size, and $W^{count}$ represents the bit width of the counter that counts the access frequency. $N^{channel}$ represents a quantity of memory channels.

Example 1: It is assumed that a page size is 2 MB ($X^{page\ size}$=2 MB), and the data is interleaved on eight memory channels based on the granularity of the cache line ($N^{channel}$=8), a size of an interleaved data block of each memory channel is 256 KB, a capacity of the memory is 64 GB ($n^{capacity}$=64 GB), a bit width of the counter that counts the access frequency is 4 B ($W^{count}$=4 B), and a capacity of the storage medium is 1 MB. Physical address space of the storage medium that needs to be reserved by the computer device for the eight memory channels is 8 MB. A processor obtains access frequency that is of accessing the eight memory channels and that is based on a unit of 256 KB, and may combine the access frequency to obtain access frequency of accessing a complete 2 MB page, to perform data migration. For example, the processor may add the eight pieces of data.

Example 2: It is assumed that a page size is 4 KB ($X^{page\ size}$=4 KB), and the data is interleaved on eight memory channels based on the granularity of the cache line ($N^{channel}$=8), a size of an interleaved data block of each memory channel is 512 B, a capacity of the memory is 64 GB ($n^{capacity}$=64 GB), a bit width of the counter that counts the access frequency is 4 B ($W^{count}$=4 B), and a capacity of the storage medium is 0.5 GB. An RCD of each memory channel needs to record access frequency based on a unit of 512 B. Physical address space of the storage medium that needs to be reserved by the computer device for the eight memory channels is 4 GB.

It should be understood that the components included in the computer device 100 shown in FIG. 1 are merely examples for description. In a specific embodiment, a quantity of components may be determined based on a service requirement.

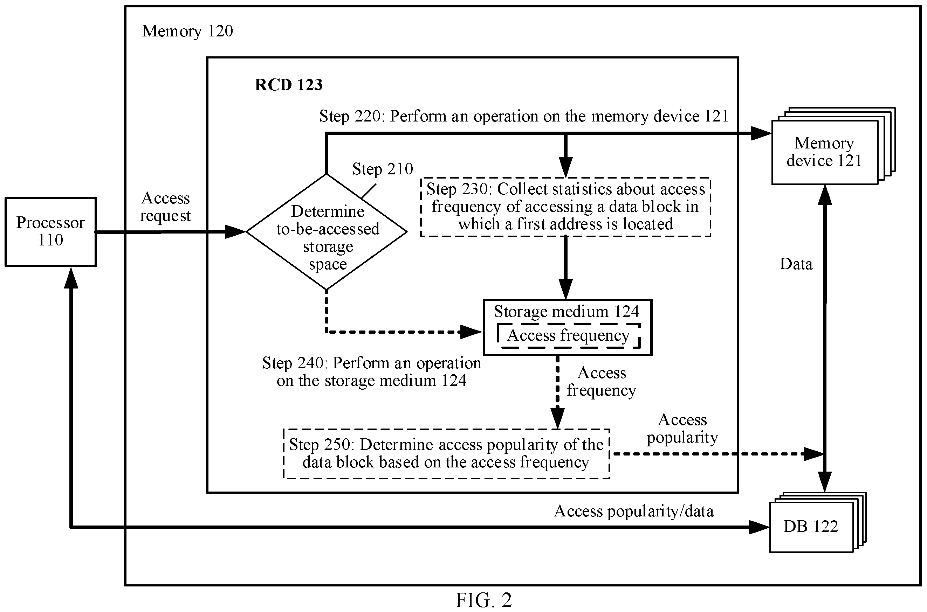

The following describes, with reference to FIG. 2, a memory access popularity statistics method according to this application, as shown in the figure.

**Step 210: An RCD 123 determines storage space to be accessed by an access request sent by a processor 110.**

The RCD 123 receives, by using a memory bus (for example, a DDR bus), the access request sent by the processor 110, and decodes the access request to obtain a physical address and an operation instruction. The RCD 123 determines, based on the physical address, whether the processor 110 accesses a memory device 121 or a storage medium 124 in a memory 120.

If the physical address indicates storage space of the memory device 121, it indicates that the RCD 123 determines that an application program run by the processor 110 accesses the memory device 121, and determines, based on the operation instruction, to perform a read operation or a write operation on the memory device 121. **Step 220 and step 230 are performed.**

If the physical address indicates storage space of the storage medium 124, it indicates that the RCD 123 determines that the processor 110 accesses the storage medium 124 to obtain access frequency of accessing a data block, and determines, based on the operation instruction, to perform a read operation on the storage medium 124. **Step 240 and step 250 are performed.**

**Step 220: The RCD 123 performs an operation on the memory device 121 in the memory 120.**

If the operation instruction instructs to perform the write operation on the storage space indicated by the physical address in the memory device 121, the RCD 123 writes data obtained by using a DB 122 into the storage space indicated by the physical address.

If the operation instruction instructs to perform the read operation on the storage space indicated by the physical address in the memory device 121, the RCD 123 reads data stored in the storage space indicated by the physical address, and transmits the data to the processor 110 by using a DB 122.

**Step 230: The RCD 123 collects statistics about access frequency of accessing a data block in which a first address is located.**

Because a cache line is used as a minimum granularity for an operation performed on the memory 120 by the application program run by the processor 110, the access request sent by the processor 110 indicates the application program run by the processor 110 to perform a read operation or a write operation on a cache line. The RCD 123 performs a read operation or a write operation based on a cache line indicated by the physical address. If one cache line is read once or written once, access frequency of accessing a page to which the cache line belongs is increased by one. The RCD 123 may set a counter for each page, to collect statistics about access frequency of accessing the page. Each time the application program run by the processor 110 accesses the page, the counter corresponding to the page is incremented by one. Therefore, memory access popularity statistics are collected by using a page of storage space of a memory managed by a computer device as a granularity, to improve accuracy of collecting statistics about memory access popularity.

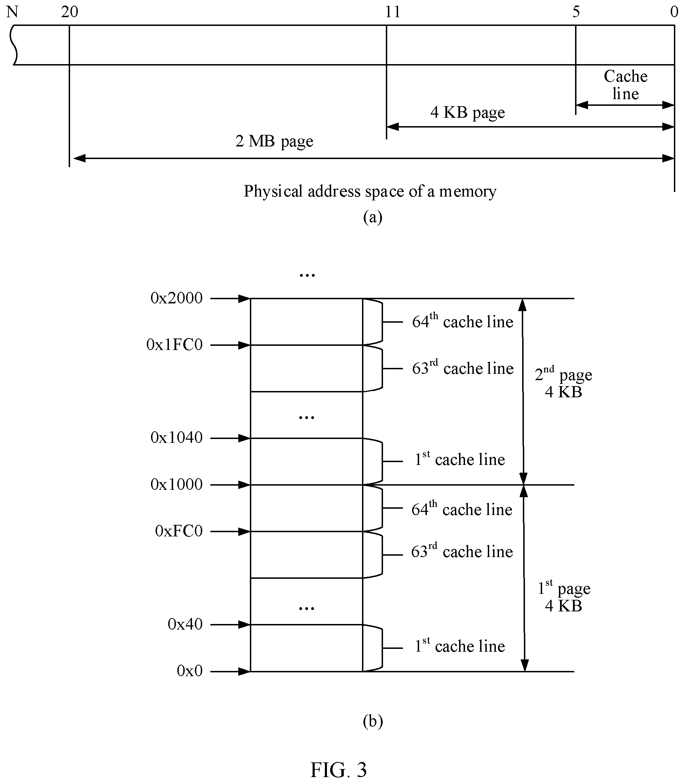

For example, as shown in (a) in FIG. 3, a size of physical address space of the memory is $2^{N+1}$, and a size of the cache line is 64 bytes. A page size may be 4 KB or 2 MB.

As shown in (b) in FIG. 3, it is assumed that a size of a cache line is 64 bytes, and a page size is 4 KB. A 4 KB page includes 64 consecutive cache lines. A physical address 0x000 represents a start address of a first page. A physical address 0x1000 represents a start address of a second page. The first page includes 64 consecutive cache lines between the physical address 0x000 and the physical address 0x1000. The second page includes 64 consecutive cache lines between the physical address 0x1000 and a physical address 0x2000.

When the RCD 123 collects statistics about the access frequency by page, an address segment for statistics is determined based on the page size. For example, the page size is 4 KB, and the RCD 123 collects statistics about access frequency of accessing a page included in an address segment [N:12]. N represents a capacity of the memory 120. For example, a capacity of the memory 120 is 64 GB, and N=35. It is assumed that the capacity of the memory 120 is 64 GB. The address segment [N:12] includes 64 GB/4 KB=16 MB pages, and the RCD 123 collects statistics about access frequency of accessing the 16 MB pages included in the address segment [N:12].

For another example, a page size is 2 MB, and the RCD 123 collects statistics about access frequency of accessing a page included in an address segment [N:21]. It is assumed that the capacity of the memory 120 is 64 GB. The address segment [N:21] includes 64 GB/2 MB= 32 KB pages, and the RCD 123 collects statistics about access frequency of accessing the 32 KB pages included in the address segment [N:21].

It is assumed that the physical address included in the access request indicates the first address, and the application program run by the processor 110 accesses a cache line indicated by the first address in the memory device 121. The first address may be an address of a cache line or an address segment in an address segment about which statistics are collected. The RCD 123 identifies a second address based on an address of a page in which the first address is located and an address mapping relationship, reads, from the storage medium 124 based on the second address, access frequency of an accessed page, updates the access frequency of accessing the page, in other words, increases the access frequency of accessing the page by one, and writes updated access frequency of accessing the page back to the storage medium 124. The second address indicates a location of storage space in which the access frequency of accessing the page is stored. The second address may be a page number of the page or an address of the page. The address mapping relationship indicates a mapping relationship between the address of the page and an address of the storage space in which the access frequency is stored. For example, when the first address indicates an address, the RCD 123 determines, based on the first address, a page number of a page in which the cache line indicated by the first address is located, and reads, from the storage medium 124 based on the page number of the page, access frequency of the accessed page. When the first address indicates an address segment, the RCD 123 determines, based on the first address, page numbers of all pages in which cache lines indicated by the address segment are located, and then reads, from the storage medium 124 based on the page numbers of the pages, access frequency of the accessed page.

**Step 240: The RCD 123 performs an operation on the storage medium 124 in the memory 120.**

Because the computer device pre-allocates a capacity of the memory device 121 in the memory 120, when the processor 110 accesses the storage medium 124, the computer device allocates, from the capacity of the memory device 121 in the memory 120, physical address space corresponding to a capacity of the storage medium 124 to the storage medium 124, and the RCD 123 maps a physical address for accessing the storage medium 124 to the storage medium 124. In this way, the corresponding capacity in the memory device 121 cannot be used, causing a waste of the storage space of the memory device 121. For example, if the page size is 4 KB, 64 MB storage space of the memory is wasted.

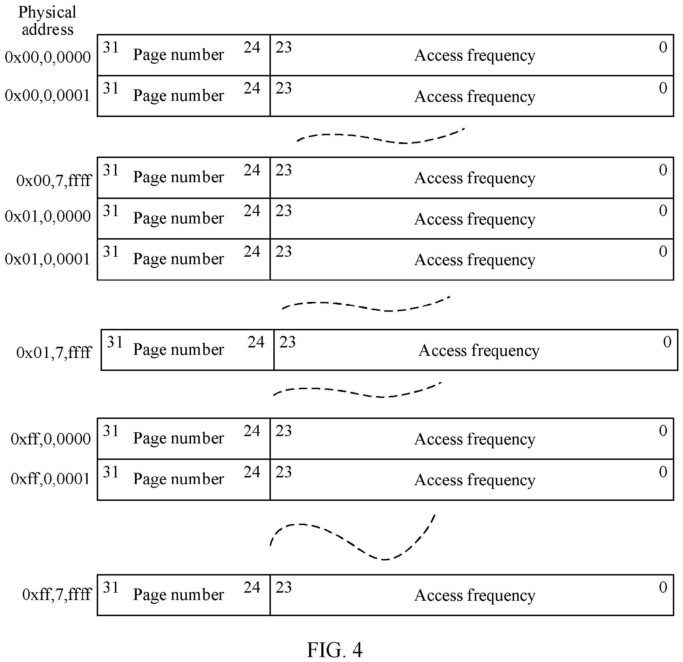

The RCD 123 may determine the physical address of the storage medium 124 based on the page number of the page (the address of the page), and store a field formed by some bits of the page number and access frequency into corresponding address space in the storage medium 124. As shown in FIG. 4, the bit width of the counter of each page is 4 B (32 bits) and is divided into two parts. One part is used for recording the access frequency of accessing the page, and the other part is used for recording any 8 bits of the page number of the page. A location of recording the access frequency of accessing the page and a location of recording the any 8 bits of the page number of the page are not limited. A bit 23 to a bit 0 are used for recording the access frequency of accessing the page, and a bit 32 to a bit 24 are used for recording the any 8 bits of the page number of the page. For example, the bit 32 to the bit 24 represent 8 least significant bits of the page number of the page. Further, the page number of the page is used for generating the corresponding address space that is accessed by the processor 110 and in which the access frequency of accessing the page is stored in the storage medium 124, to obtain a mapping relationship between an address of the data block and an address of the storage space that is used for storing the access frequency, so that address space reserved for the memory 120 can be saved, and an objective of mapping, by using a small amount of address space, the address space of the storage medium for storing the access frequency is achieved. This helps the RCD 123 determines, based on the address mapping relationship, the physical address for accessing the storage medium 124 by the processor 110, and improves storage space utilization of the memory device 121.

In some embodiments, some bits of the page number of the page are used for generating the corresponding address space that is accessed by the processor 110 and in which the access frequency of accessing the page is stored in the storage medium 124. For example, remaining bits obtained by deleting any bit in a page number of a page are used as the corresponding address space that is accessed by the processor 110 and in which the access frequency of accessing the page is stored in the storage medium 124. If a larger quantity of any bits of the page number of the page are deleted, it indicates that corresponding address space that is accessed by the processor 110 and in which the access frequency of accessing the page is stored in the storage medium 124 is smaller. On the contrary, if a smaller quantity of any bits of the page number of the page are deleted, it indicates that corresponding address space that is accessed by the processor 110 and in which the access frequency of accessing the page is stored in the storage medium 124 is larger. For example, after performing an operation on a page in the memory device 121, the RCD 123 stores the 8 least significant bits of the page number of the page into the bit 32 to the bit 24 of the counter, and increases access frequency recorded in the bit 23 to the bit 0 by one.

The physical address obtained by the RCD 123 indicates the storage space of the storage medium 124, indicating that the RCD 123 determines that the processor 110 accesses the storage medium 124 to obtain the access frequency of accessing the data block, and determines, based on the operation instruction, to perform the read operation on the storage medium 124. The physical address may be the remaining bits obtained by deleting the any bits in the page number of the page. For example, the RCD 123 obtains a third address, determines storage space that is indicated by the third address and that is of the storage medium 124, extracts 8 most significant bits after reading 32-bit data, and then adds the third address to obtain a page number, where corresponding 24-bit data bits are access frequency of accessing a page corresponding to the page number.

**Step 250: The RCD 123 determines access popularity of the data block based on the access frequency.**

If the access frequency is greater than or equal to a threshold, it is determined that the data block is hot data; or if the access frequency is less than a threshold, it is determined that the data block is cold data. The RCD 123 may feed back a page number and access popularity of a page indicated by the page number to the processor 110, to trigger data migration.

In this way, the processor performs an operation on the memory by using the cache line as the granularity, and the cache line belongs to a managed page. Therefore, when the operation is performed on the cache line in the memory once, the page to which the cache line belongs is read and written once. A controller collects statistics about access frequency of accessing the page to which the operated cache line belongs. This effectively improves accuracy of identifying the access popularity of the page. In addition, the controller collects, by using the page as the granularity, statistics about the access frequency of accessing the page, which is compatible with a manner of memory page management performed by the computer device. The memory access popularity statistics method is easy to use. In addition, when the data migration is triggered based on the access popularity of the data block, hot data may be migrated to a near memory, and cold data may be migrated to a far memory, so that the processor may obtain frequently accessed data from the near memory as quickly as possible. This improves a data processing speed of a system, reduces a data processing delay, and significantly improves access performance of the system.

In the foregoing embodiment, the 4 KB page (small page) and the 2 MB page (huge page) are used for describing the memory access popularity statistics method.

In some other embodiments, when the application program run by the processor performs an operation on the memory of the computer device in an interleaving manner, data that accesses the memory is evenly distributed to a plurality of memory channels based on unit storage space (for example, the cache line). When a controller of each memory channel collects statistics about memory access popularity, the controller collects statistics about access frequency of accessing an interleaved data block. For a method for collecting, by the controller of each memory channel, statistics about the access frequency of accessing the interleaved data block, refer to the foregoing descriptions of the access frequency of accessing the page.

In comparison with a non-interleaving scenario, a difference in collecting statistics about the access frequency of accessing the interleaved data block lies in that: a size of the interleaved data block is less than the page size, and a corresponding address space that is accessed by the processor 110 and in which the access frequency of accessing the page is stored in the storage medium 124 is generated based on some bits in an address of the interleaved data block.

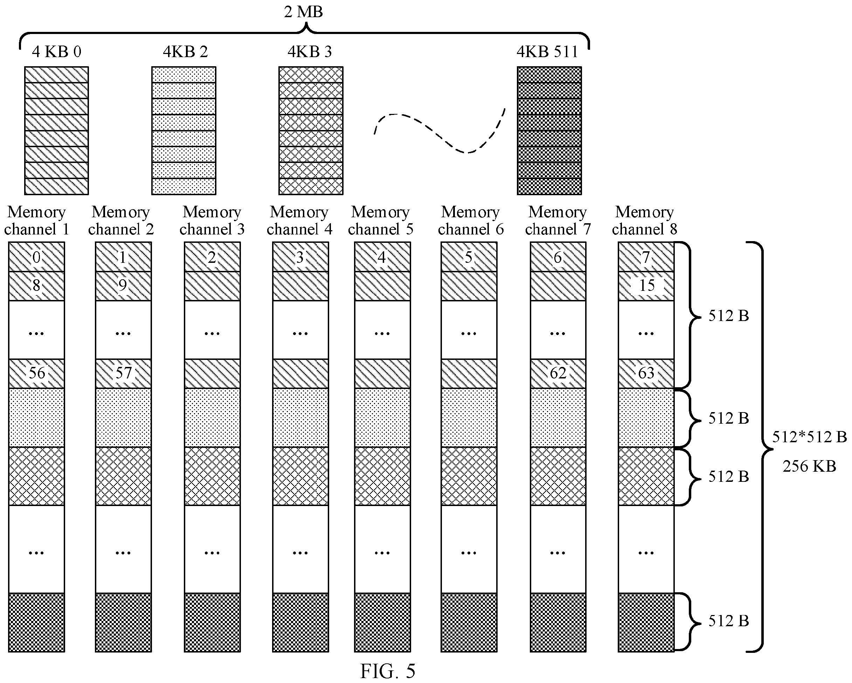

For example, as shown in FIG. 5, a 2 MB page includes 512 pages of 4 KB, a size of a cache line is 64 B, and a 4 KB page includes 64 cache lines. The 2 MB page includes 512*64 cache lines, which are evenly distributed to eight memory channels, and each memory channel is allocated with 512*512 B cache lines. Each memory channel includes a 256 KB interleaved data block.

For example, if a page size is 4 KB ($X^{page\ size}$=4 KB), and data is interleaved on the eight memory channels based on a granularity of the cache line ($N^{channel}$=8), a size of the interleaved data block of each memory channel is 512 B. The controller in each memory records access frequency of accessing interleaved data blocks of 64 GB/512 B=128 MB. A capacity of a storage medium that is in the controller in each memory and that is used for storing the access frequency of accessing the interleaved data block is 0.5 GB. Physical address space of the storage medium that needs to be reserved by a computer device for the eight memory channels is 4 GB.

For another example, the page size is 2 MB ($X^{page\ size}$=2 MB), a memory capacity is 64 GB, and a bit width of a counter is 4 B. Address space reserved in each memory is 1 MB, and memory address space of 8 MB is reserved for eight memory channels.

In some embodiments, the controller may determine, based on a mapping relationship between an address of the interleaved data block and an address of storage space for storing the access frequency, an address of storage space that is accessed by a processor and that is used for storing the access frequency of accessing the interleaved data block in the controller. To be specific, the controller stores any 8 bits of the address of the interleaved data block into a bit 32 to a bit 24 of the counter of the interleaved data block, and increases access frequency that is of accessing the interleaved data block and that is recorded in a bit 23 to a bit 0 by one. Remaining bits of the address of the interleaved data block are used as a physical address that is accessed by the processor and that stores the access frequency of accessing the interleaved data block in the storage medium.

For example, when the controller in the memory records access frequency of accessing interleaved data blocks of 64 GB/512 B=128 MB, physical address space for accessing the storage medium by the processor is reduced to 0.5 GB/256=2 MB, and a bit width of a counter that counts access frequency is 4 B. A minimum data granularity of the counter that counts the access frequency of the access performed by the processor is 4 B, and the 2 MB physical address space may be further reduced to 2 MB/4 B=512 KB. 4 MB physical address space needs to be reserved in total for the eight memory channels, and therefore, only 4 MB memory capacity is wasted.

The controller determines, based on a physical address indicated by the processor for accessing the storage medium, a physical address that is in the storage medium and that stores access frequency of accessing a page. For example, for each memory, the processor periodically and continuously reads the access frequency that is of accessing the interleaved data block and that is stored in the controller in the memory. The controller detects corresponding 512 KB address access, where the physical address is addressed as PA[18:0]. The controller implements an 8-bit address counter AddrCnt[7:0]. When a 512 KB address is accessed continuously once, the counter AddrCnt[7:0] is incremented by one, and the controller generates a physical address MAT_Addr={AddrCnt[7:0], PA[18:0]}. The controller accesses, based on the physical address MAT_Addr, the access frequency that is of accessing the interleaved data block and that is stored in the controller.

After reading 32-bit data, the controller extracts 8 most significant bits, and then adds PA[18:0]. A total of 27 bits are the address (sub-page (Sub-page)) of the interleaved data block, and 24 least significant bits of corresponding data bits are the access frequency of accessing the corresponding interleaved data block. The processor obtains 512 B-based access frequency of accessing the eight memory channels, and may combine the 512 B-based access frequency to obtain access frequency of accessing a complete 4 KB page. For example, the access frequency of accessing the eight memory channels is added, or an average value, a variance, a maximum value, and the like of the access frequency of accessing the eight memory channels are obtained.

In the foregoing embodiment, the processor 110 uses an access request as an example to describe a memory access popularity statistics method. If an application program run by the processor 110 sends a plurality of access requests for an operation on the memory of the computer device, statistics about a data block in which a physical address corresponding to each access request is located are collected. For a specific method, refer to the descriptions in the foregoing embodiment.

With reference to the accompanying drawings, the foregoing embodiments describe a scenario of a connection relationship between the controller included in the computer device and the near memory and a memory access popularity statistics method of the near memory. The memory 120 described in the foregoing embodiments may indicate the near memory (which may also be referred to as a near memory), and the RCD 123 may refer to a controller that controls the near memory to collect statistics about memory access popularity.

In some other embodiments, the computer device may include the far memory (which may also be referred to as a far memory), and the controller collects statistics about access frequency of accessing the far memory. A difference from the connection relationship between the near memory and the controller lies in that, in comparison with the memory controller in the processor, the controller that controls the far memory to collect statistics about the memory access popularity may be an extended controller.

Optionally, the computer device includes the far memory and the near memory, the RCD in the near memory collects statistics about access frequency of accessing the near memory, and the extended controller connected to the far memory collects statistics about the access frequency of accessing the far memory.

A threshold of the access frequency is determined based on an application, data whose access frequency is greater than the threshold is determined as hot data and stored in the near memory, and data whose access frequency is less than the threshold is determined as cold data and stored in the far memory. On a premise that a threshold setting does not affect application performance, it is found that only a small amount of memory access data is the hot data, and most memory access data is the cold data. The computer device may be configured with a larger proportion of far memories, to reduce system costs. A reduction of a proportion of hot data may reduce data migration between the near memory and the far memory, and reduce occupation of system memory bandwidth and CPU overheads.

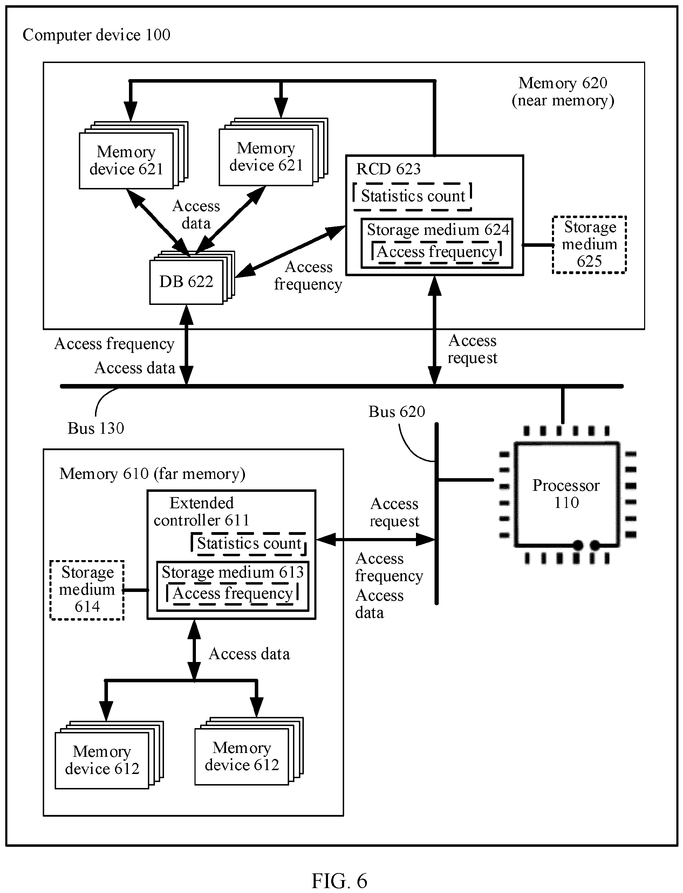

In a possible implementation, this application further provides a schematic diagram of a structure of another computer device. As shown in FIG. 6, on the basis that the computer device 100 includes the processor 110 and the memory 120, the computer device 100 further includes a memory 610. The memory 120 may be used as a near memory, and the memory 610 may be used as a far memory. The processor 110 is connected to the memory 610 by using a bus 620.

The memory 610 includes an extended controller 611, a memory device 612, and a storage medium 613. The memory device 612 includes a DRAM and an SCM. The storage medium 613 may be a DRAM.

The extended controller 611 is configured to: perform a read operation or a write operation in the memory device 612 based on an access request of the processor 110, count access frequency of accessing a data block in the memory device 612, and store the access frequency of accessing the data block in the storage medium 613. The extended controller 611 may further be connected to an external storage medium 614, configured to expand a storage capacity of the storage medium 613 and store the access frequency of accessing the data block.

The extended controller 611 is further configured to obtain the access frequency of accessing the data block from the storage medium 613.

For a function of the extended controller 611, a method for counting the access frequency of accessing the data block in the memory device 612 in the memory 610, and obtaining the access frequency of accessing the data block obtained from the storage medium 613, refer to related descriptions of collecting statistics about access frequency of accessing the near memory by the controller.

The memory 610 may be a volatile memory pool or a nonvolatile memory pool, or may include both a volatile memory and a nonvolatile memory. The nonvolatile memory may be a ROM, a PROM, an EPROM, an EEPROM, or a flash memory. The volatile memory may be a RAM. By way of example but not limitation description, many forms of RAMs may be used, for example, an SRAM, a DRAM, an SDRAM, a DDR SDRAM, an ESDRAM, an SLDRAM, and a DR RAM.

The bus 620 may include a channel, configured to transmit data between the foregoing components (for example, the processor 110 and the memory 610). For example, the processor 110 sends an access request to the memory 610, and the memory 610 feeds back the access frequency of accessing the data block to the processor 110. In addition to a data bus, the bus 620 may further include a power bus, a control bus, a status signal bus, and the like. For example, the bus 620 is a DDR bus. However, for clear description, various types of buses are marked as the bus 620 in the figure. The bus 620 may be a peripheral component interconnect express (Peripheral Component Interconnect Express, PCIe) bus, an extended industry standard architecture (extended industry standard architecture, EISA) bus, a unified bus (unified bus, Ubus, or UB), a computer quick link (compute express link, CXL), cache coherent interconnect for accelerators (cache coherent interconnect for accelerators, CCIX), or the like. The bus 620 may be classified into an address bus, a data bus, a control bus, and the like.

In this embodiment of this application, structures of the near memory and the far memory that are included in the computer device are described. For a memory access popularity statistics method of the near memory and the far memory, refer to the foregoing descriptions of collecting statistics about memory access popularity of the near memory. The RCD in the near memory collects statistics about the access frequency of accessing the near memory, and the extended controller connected to the far memory collects statistics about the access frequency of accessing the far memory, which almost does not consume CPU performance. In addition, the processor performs an operation on the memory by using a cache line as a granularity, and the cache line belongs to a managed page. Therefore, when the operation is performed on the cache line in the memory once, the page to which the cache line belongs is read and written once. The controller collects statistics about access frequency of accessing the page to which an operated cache line belongs. This effectively improves accuracy of identifying access popularity of the page. In addition, the controller collects, by using the page as a granularity, statistics about access frequency of accessing the page, which is compatible with a manner of memory page management performed by the computer device. The memory access popularity statistics method is easy to use. In addition, a threshold of access frequency is determined based on an application, data whose access frequency is greater than the threshold is determined as hot data and stored in a near memory, and data whose access frequency is less than the threshold is determined as cold data and stored in a far memory. On a premise that a threshold setting does not affect application performance, it is found that only a small amount of memory access data is the hot data, and most memory access data is the cold data. The computer device may be configured with a larger proportion of far memories, to reduce system costs. A reduction of a proportion of hot data may reduce data migration between the near memory and the far memory, and reduce occupation of system memory bandwidth and CPU overheads.

To implement the functions in the foregoing embodiments, the controller includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

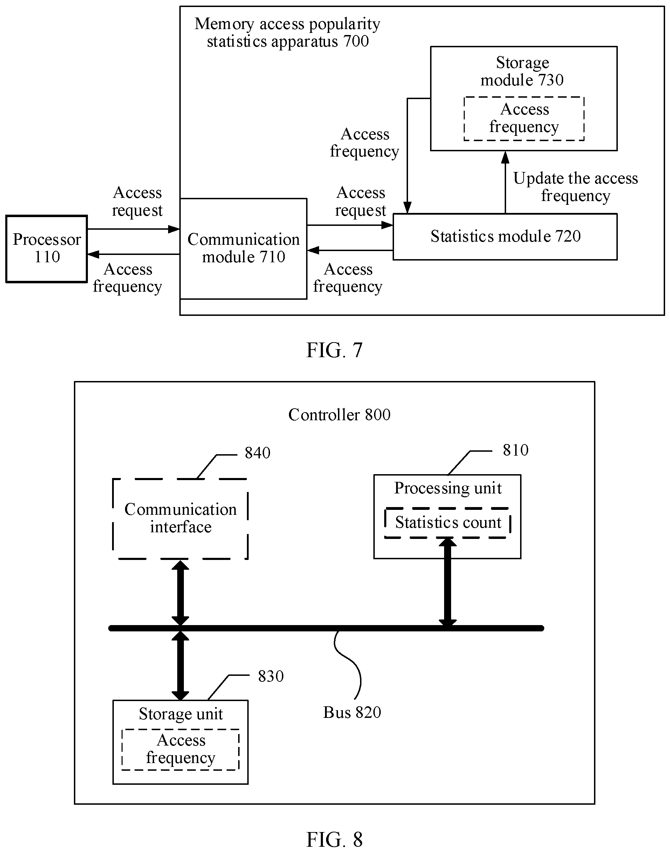

With reference to FIG. 1 to FIG. 6, the foregoing describes in detail the memory access popularity statistics method according to this application. With reference to FIG. 7, the following describes a memory access popularity statistics apparatus according to this application.

FIG. 7 is a schematic diagram of a structure of a possible memory access popularity statistics apparatus according to this application. These memory access popularity statistics apparatuses may be configured to implement functions of the controller in the foregoing method embodiments, and therefore can also implement beneficial effects of the foregoing method embodiments. In this embodiment, the memory access popularity statistics apparatus may be the controller shown in FIG. 2, or may be a module (such as a chip) applied to a computer device.

As shown in FIG. 7, the memory access popularity statistics apparatus 700 includes a communication module 710, a statistics module 720, and a storage module 730. The memory access popularity statistics apparatus 700 is configured to implement a function of the controller in the method embodiment shown in FIG. 2.

The communication module 710 is configured to determine a first address based on an obtained access request, where the access request indicates an operation performed on a memory of the computer device by an application program run by a processor in a computer device in which the controller is located, and the first address is a physical address in the memory.

The statistics module 720 is configured to collect statistics about access frequency of accessing a data block in which the first address is located, where a size of the data block is a multiple of unit storage space in the memory that is accessible to the processor. For example, the statistics module 720 is configured to perform step 210 to step 250 in FIG. 2.

The statistics module 720 is specifically configured to collect statistics about the access frequency of accessing the data block in which the unit storage space to which the first address belongs is located.

The storage module 730 is configured to store the access frequency, so that the statistics module 720 determines access popularity of the data block based on the access frequency and triggers data migration.

The memory access popularity statistics apparatus 700 in this embodiment of this application may be implemented by using an application-specific integrated circuit (application-specific integrated circuit, ASIC), or a programmable logic device (programmable logic device, PLD). The PLD may be a complex programmable logic device (complex programmable logical device, CPLD), a field-programmable gate array (field-programmable gate array, FPGA), a generic array logic (generic array logic, GAL), a DPU, a SoC, or any combination thereof. When the memory access popularity statistics method shown in FIG. 2 may also be implemented by using software, the modules of the method may also be software modules, and the memory access popularity statistics apparatus 700 and the modules of the apparatus 700 may also be software modules.

The memory access popularity statistics apparatus 700 according to this embodiment of this application may correspondingly perform the methods described in embodiments of this application, and the foregoing and other operations and/or functions of the units in the memory access popularity statistics apparatus 700 are respectively used for implementing corresponding procedures of the methods in FIG. 2. For brevity, details are not described herein again.

FIG. 8 is a schematic diagram of a structure of a controller 800 according to this application. As shown in the figure, the controller 800 includes a processing unit 810, a bus 820, a storage unit 830, and a communication interface 840. The processing unit 810, the storage unit 830, and the communication interface 840 are connected by using the bus 820.

In this embodiment, the processing unit 810 may be a CPU, or the processing unit 810 may be another general-purpose processor, a digital signal processor (digital signal processing, DSP), an ASIC, an FPGA or another programmable logic device, a discrete gate or a transistor logic device, a discrete hardware component, or the like. The general-purpose processor may be a microprocessor or any conventional processor or the like.

The communication interface 840 is configured to implement communication between the controller 800 and an external device or component. In this embodiment, when the controller 800 is configured to implement a function of the controller shown in FIG. 2, the communication interface 840 is configured to obtain an access request.

The bus 820 may include a channel, configured to transmit information between the foregoing components (for example, the processing unit 810 and the storage unit 830). In addition to a data bus, the bus 820 may further include a power bus, a control bus, a status signal bus, and the like. However, for clear description, various types of buses are marked as the bus 820 in the figure. The bus 820 may be a peripheral component interconnect express (Peripheral Component Interconnect Express, PCIe) bus, an extended industry standard architecture (extended industry standard architecture, EISA) bus, a unified bus (unified bus, Ubus, or UB), a computer quick link (compute express link, CXL), cache coherent interconnect for accelerators (cache coherent interconnect for accelerators, CCIX), or the like. The bus 820 may be classified into an address bus, a data bus, a control bus, and the like.

In an example, the controller 800 may include a plurality of processors. The processor may be a multi-core (multi-CPU) processor. The processor herein may be one or more devices, circuits, and/or processing units configured to process data (for example, computer program instructions). In this embodiment, when the controller 800 is configured to implement the function of the controller shown in FIG. 2, the processing unit 810 collects statistics about access frequency of accessing a data block in which a first address is located.

Optionally, a method for collecting statistics about the access frequency of accessing the data block may also be burnt into the processing unit 810, so that the processing unit 810 collects statistics about the access frequency of accessing the data block.

In FIG. 8, only an example in which the controller 800 includes one processing unit 810 and one storage unit 830 is used. Herein, the processing unit 810 and the storage unit 830 are separately configured to indicate a type of component or device. In a specific embodiment, a quantity of components or devices of each type may be determined based on a service requirement.

The storage unit 830 may correspond to the foregoing method embodiment and is configured to store information such as the access frequency. The storage unit 830 may be a volatile memory pool or a nonvolatile memory pool, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage unit 830 may further correspond to a storage medium, for example, a magnetic disk, such as a mechanical hard disk drive or a solid state disk, configured to store information such as computer instructions in the foregoing method embodiment.

The controller 800 may be a general-purpose device or a dedicated device. For example, the controller 800 may also be a server or another device having a computing capability.

The controller 800 according to this embodiment may correspond to the memory access popularity statistics apparatus 700 in this embodiment, and may correspond to a corresponding body performing any method according to FIG. 2. In addition, the foregoing and other operations and/or functions of the modules in the memory access popularity statistics apparatus 700 are respectively used for implementing corresponding procedures of the methods in FIG. 2. For brevity, details are not described herein again.

The controller 800 in this embodiment of this application may be an RCD controller in a memory of a computer device. Alternatively, the controller 800 is an extended controller connected to a memory of a computer device.

An embodiment of this application further provides a chip, including a processor and a power supply circuit, where the power supply circuit is configured to supply power to the processor, and the processor is configured to perform the memory access popularity statistics method in the foregoing embodiment.

An embodiment of this application further provides a memory. The memory includes a storage device and a controller. The storage device is configured to store a group of computer instructions. When the controller executes the group of computer instructions, the memory access popularity statistics method in the foregoing embodiment is performed.

An embodiment of this application further provides a mainboard. The mainboard includes a controller, and the controller performs the memory access popularity statistics method in the foregoing embodiment.

The method steps in this embodiment may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any other form of storage medium well-known in the art. For example, a storage medium is coupled to a processor, so that the processor can read information from the storage medium and write information into the storage medium. It is clear that the storage medium may be a component of the processor. The processor and the storage medium may be disposed in an ASIC. In addition, the ASIC may be located in a computing device. It is clear that the processor and the storage medium may alternatively exist in the computing device as discrete components.

All or some of the foregoing embodiments may be implemented by using software, hardware, firmware, or any combination thereof. When software is used for implementing the embodiments, all or some of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1.   A memory access popularity statistics method, wherein the method is performed by a controller and comprises:

   determining a first address based on an obtained access request, wherein the access request indicates an operation performed on a memory of a computer device by an application program run by a processor in the computer device in which the controller is located, and the first address is a physical address in the memory;
   collecting statistics about access frequency of accessing a data block in which the first address is located, wherein a size of the data block is a multiple of unit storage space in the memory that is accessible to the processor; and
   determining access popularity of the data block based on the access frequency.

2.   The method according to claim 1, wherein the collecting statistics about access frequency of accessing a data block in which the first address is located comprises:
   collecting statistics about the access frequency of accessing the data block in which the unit storage space to which the first address belongs is located.

3.   The method according to claim 2, wherein the method further comprises:
   identifying a second address based on an address of the data block in which the first address is located and an address mapping relationship, wherein the second address indicates a location, in the controller, at which the access frequency of accessing the data block is stored, and the address mapping relationship indicates a mapping relationship between the address of the data block and an address of storage space in which the access frequency is stored.

4.   The method according to claim 3, wherein the method further comprises:
   identifying the second address based on a third address indicated by the processor and the address mapping relationship, to obtain the access frequency of accessing the data block, wherein the third address is determined based on the second address.

5. The method according to any one of claims 1 to 4, wherein the size of the data block is a size of one page in the memory that is accessible to the processor.

6. The method according to any one of claims 1 to 4, wherein the size of the data block is a size of an interleaved data block in the memory that is accessible to the processor in an interleaving manner, and the interleaving manner means that the processor in the computer device distributes, to a plurality of memories for an operation, data of the operation performed by the running application program on the memory of the computer device.

7. The method according to any one of claims 1 to 6, wherein a size of the unit storage space is a size of a cache line when the processor accesses the memory.

8. A memory access popularity statistics apparatus, comprising:

a communication module, configured to determine a first address based on an obtained access request, wherein the access request indicates an operation performed on a memory of a computer device by an application program run by a processor in the computer device in which a controller is located, and the first address is a physical address in the memory; and
a statistics module, configured to collect statistics about access frequency of accessing a data block in which the first address is located, wherein a size of the data block is a multiple of unit storage space in the memory that is accessible to the processor, wherein
the statistics module is further configured to determine access popularity of the data block based on the access frequency.

9. The apparatus according to claim 8, wherein when collecting statistics about the access frequency of accessing the data block in which the first address is located, the statistics module is specifically configured to:
collect statistics about the access frequency of accessing the data block in which the unit storage space to which the first address belongs is located.

10. The apparatus according to claim 9, wherein the statistics module is further configured to:
identify a second address based on an address of the data block in which the first address is located and an address mapping relationship, wherein the second address indicates a location, in the controller, at which the access frequency of accessing the data block is stored, and the address mapping relationship indicates a mapping relationship between the address of the data block and an address of storage space in which the access frequency is stored.

11. The apparatus according to claim 10, wherein the statistics module is further configured to:
identify the second address based on a third address indicated by the processor and the address mapping relationship, to obtain the access frequency of accessing the data block, wherein the third address is determined based on the second address.

12. The apparatus according to any one of claims 8 to 11, wherein the size of the data block is a size of one page in the memory that is accessible to the processor.

13. The apparatus according to any one of claims 8 to 11, wherein the size of the data block is a size of an interleaved data block in the memory that is accessible to the processor in an interleaving manner, and the interleaving manner means that the processor in the computer device distributes, to a plurality of memories for an operation, data of an operation performed by the running application program on the memory of the computer device.

14. The apparatus according to any one of claims 8 to 13, wherein a size of the unit storage space is a size of a cache line when the processor accesses the memory.

15. A controller, wherein the controller comprises a storage unit and a processing unit, the storage unit is configured to store a group of computer instructions, and when executing the group of computer instructions, the processing unit performs an operation step of the method according to any one of claims 1 to 7, to identify access frequency of accessing a data block in a memory by an application program.

16. The controller according to claim 15, wherein the controller is a register clock driver RCD in the memory of a computer device.

17. The controller according to claim 15, wherein the controller is an extended controller in the memory of a computer device.

18. A chip, comprising a processor and a power supply circuit, wherein the power supply circuit is configured to supply power to the processor, and the processor is configured to perform an operation step of the method according to any one of claims 1 to 7.

19. A memory, wherein the memory comprises a storage device and the controller according to any one of claims 15 to 17, the storage device is configured to store a group of computer instructions, and when executing the group of computer instructions, the controller performs an operation step of the method according to any one of claims 1 to 7, to identify access frequency of accessing a data block in a memory by an application program.

20. A mainboard, wherein the mainboard comprises the controller according to any one of claims 15 to 17, and the controller performs an operation step of the method according to any one of claims 1 to 7, to identify access frequency of accessing a data block in a memory by an application program.

21. A computer device, wherein the computer device comprises the mainboard according to claim 20.

FIG. 1

FIG. 2

Physical address space of a memory

(a)

(b)

FIG. 3

Physical
address

| | | |
|---|---|---|
| 0x00,0,0000 | 31   Page number   24 | 23   Access frequency   0 |
| 0x00,0,0001 | 31   Page number   24 | 23   Access frequency   0 |
| 0x00,7,ffff | 31   Page number   24 | 23   Access frequency   0 |
| 0x01,0,0000 | 31   Page number   24 | 23   Access frequency   0 |
| 0x01,0,0001 | 31   Page number   24 | 23   Access frequency   0 |
| 0x01,7,ffff | 31   Page number   24 | 23   Access frequency   0 |
| 0xff,0,0000 | 31   Page number   24 | 23   Access frequency   0 |
| 0xff,0,0001 | 31   Page number   24 | 23   Access frequency   0 |
| 0xff,7,ffff | 31   Page number   24 | 23   Access frequency   0 |

FIG. 4

2 MB

4 KB 0      4KB 2      4KB 3      4KB 511

Memory channel 1 | Memory channel 2 | Memory channel 3 | Memory channel 4 | Memory channel 5 | Memory channel 6 | Memory channel 7 | Memory channel 8

| 0 | 1 | 2 | 3 | 4 | 5 | 6 | 7 |
| 8 | 9 | | | | | | 15 |
| ... | ... | ... | ... | ... | ... | ... | ... |
| 56 | 57 | | | | | 62 | 63 |

512 B

512 B

512 B

512*512 B
256 KB

512 B

FIG. 5

FIG. 6

FIG. 7

FIG. 8

## INTERNATIONAL SEARCH REPORT

International application No.

**PCT/CN2023/095923**

### A. CLASSIFICATION OF SUBJECT MATTER

G06F12/0877(2016.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNKI, CNTXT, ENTXT, ENTXTC, DWPI: 访问, 频次, 热度, access, frequency, popularity

### C. DOCUMENTS CONSIDERED TO BE RELEVANT

| Category* | Citation of document, with indication, where appropriate, of the relevant passages | Relevant to claim No. |
|---|---|---|
| X | CN 110858124 A (HUAWEI TECHNOLOGIES CO., LTD.) 03 March 2020 (2020-03-03) description, paragraphs 0035-0115, and figures 1-7 | 1-21 |
| A | CN 108804350 A (HUAWEI TECHNOLOGIES CO., LTD. et al.) 13 November 2018 (2018-11-13) entire document | 1-21 |
| A | US 10545683 B2 (INTERNATIONAL BUSINESS MACHINES CORP.) 28 January 2020 (2020-01-28) entire document | 1-21 |

☐ Further documents are listed in the continuation of Box C. ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **16 August 2023** | **18 August 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/095923**

| Patent document cited in search report | | | Publication date (day/month/year) | Patent family member(s) | | | Publication date (day/month/year) |
|---|---|---|---|---|---|---|---|
| CN | 110858124 | A | 03 March 2020 | EP | 3832451 | A1 | 09 June 2021 |
| | | | | EP | 3832451 | A4 | 20 October 2021 |
| | | | | WO | 2020037986 | A1 | 27 February 2020 |
| | | | | US | 2021173579 | A1 | 10 June 2021 |
| | | | | CN | 110858124 | B | 01 June 2021 |
| CN | 108804350 | A | 13 November 2018 | EP | 3608788 | A1 | 12 February 2020 |
| | | | | EP | 3608788 | A4 | 22 April 2020 |
| | | | | WO | 2018196839 | A1 | 01 November 2018 |
| | | | | US | 2020057729 | A1 | 20 February 2020 |
| | | | | CN | 108804350 | B | 21 February 2020 |
| US | 10545683 | B2 | 28 January 2020 | US | 2017228163 | A1 | 10 August 2017 |

Form PCT/ISA/210 (patent family annex) (July 2022)

**REFERENCES CITED IN THE DESCRIPTION**

**Patent documents cited in the description**

- CN 202210575022
- CN 202211016161